# EUROPEAN PATENT SPECIFICATION

(11) **EP 0 935 918 B1**
(45) Date of publication and mention of the grant of the patent: **02.01.2003**
(21) Application number: 99300859.8
(22) Date of filing: 05.02.1999
(51) Int. Cl.: A01N 43/38

(54) **Antibacterial compositions with activity against Ralstonia solanacearum**
Gegen Ralstonia Solanacearum aktive bakterizide Zusammensetzungen
Compositions antibactériennes actives contre Ralstonia solanacearum

(30) Priority: 05.02.1998 JP 4131798
(43) Date of publication of application: 18.08.1999
(73) Proprietor: KAGOME KABUSHIKI KAISHA, Nagoya-shi Aichi-ken (JP)
(72) Inventor: Matsuda, Kazuhiko, Nara-shi, Nara-ken (JP); Toyoda, Hideyoshi, Kyoutanabe-shi, Kyoto-fu (JP); Harada, Satoshi, c/o Kagome Kabushiki Kaisha, Nishinasuno-machi, Nasu-gun, Tochigi-ken (JP)
(74) Representative: Ablewhite, Alan James

(56) References cited:
- JP-T1- 7 228 502
- CHEMICAL ABSTRACTS, vol. 123, no. 25, 18 December 1995 Columbus, Ohio, US; abstract no. 332733, MATSUDA, KAZUHIKO ET AL: "Indole derivative for control of bacterial wilt" XP002103218 & JP 07 228502 A (KAGOME KK, JAPAN)

## Description

### Background of the Invention

This invention relates to antibacterial compositions with activity against *Ralstonia solanacearum*. Bacterial wilt, which affects tomatoes, egg plants, green peppers, tobacco plants, Japanese radishes, strawberries and the like, is a kind of bacterial disease caused by *Ralstonia solanacearum*. *Ralstonia solanacearum* is known for its very high rate of spreading, and exhibits very strong secondary invasion. Thus, the bacterial wilt caused thereby can be a source of severe damage, particularly for greenhouse cultivation and repeated cultivation. This invention relates to antibacterial compositions capable of dependably suppressing such bacterial wilt even when used at a low concentration.

Conventional methods of suppressing bacterial wilt include disinfection by solar radiation, root growth restriction by means of sheets, and grafting on resistant cultivars as rootstocks. However, these conventional methods achieve insufficient suppression of bacterial wilt. Use of disinfectants has also been attempted, but disinfectants, besides suppressing bacterial wilt, also have harmful effects, not only to the plants and the soil but also to the workers. In view of the above, Japanese Patent Publication Tokkai 7-228502 disclosed the use of synthetic 3-(3-indolyl)-butanoic acid and its salts in antibacterial compositions capable of suppressing *Ralstonia solanacearum*. These compositions have the desirable characteristic of being capable of selectively inhibiting the growth of *Ralstonia solanacearum*, which is the cause of bacterial wilt, and hence suppressing bacterial wilt, without having significant ill effects. However, 3-(3-indolyl)-butanoic acid and its salts, when synthesised according to the prior art, have the disadvantage that they must be used at a relatively high concentration in order to selectively inhibit the growth of *Ralstonia solanacearum*.

### Summary of the Invention

It is therefore an object of this invention to provide antibacterial compositions capable of selectively suppressing the growth of *Ralstonia solanacearum* even when used at a relatively low concentration.

This invention is based on the present inventors' discovery that the 3-(3-indolyl)-butanoic acid synthesised according to the prior art is a racemic mixture containing both enantiomers: (*S*)-3-(3-indolyl)-butanoic acid (which is the *S* enantiomer of 3-(3-indolyl)-butanoic acid) and (*R*)-3-(3-indolyl)-butanoic acid (which is the *R* enantiomer of 3-(3-indolyl)-butanoic acid), and that it is the former of these two that has the significant chemical effect of selectively inhibiting the growth of *Ralstonia solanacearum* and is hence capable of dependably suppressing bacterial wilt, even when used at a relatively low concentration, without having significant ill effects

### Detailed Description of the Invention

This invention relates to antibacterial compositions with activity against *Ralstonia solanacearum*, of which the active component is substantially (*S*)-3-(3-indolyl)-butanoic acid shown by Formula (1) given below or salts thereof:

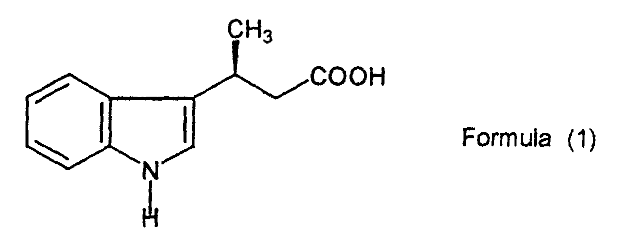

3-(3-Indolyl)-butanoic acid as synthesised according to the prior art is a racemic mixture which contains as enantiomers both the aforementioned (*S*)-3-(3-indolyl)-butanoic acid shown by Formula (1) given above and (*R*)-3-(3-indolyl)-butanoic acid shown by Formula (2) given below:

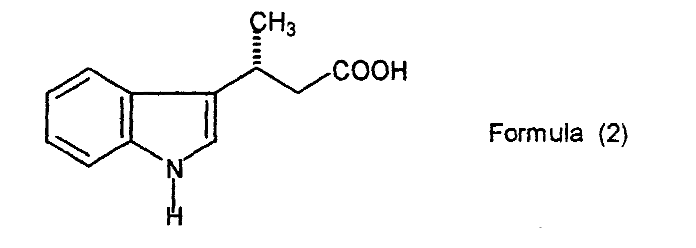

As will be shown below more in detail, (*S*)-3-(3-indolyl)-butanoic acid given by Formula (1) above can be obtained by a process comprising the following three steps:
(1) a First Step wherein a condensation product of Meldrum's acid and acetaldehyde is caused to undergo an addition reaction with indole to obtain a reaction product;
(2) a Second Step wherein the reaction product obtained in the First Step is dissolved in a mixture of pyridine and alcohol, copper is added thereto and a decarboxylation reaction is effected by heating under reflux, to afford a racemic mixture of esters of 3-(3-indolyl)-butanoic acid; and
(3) a Third Step wherein the esters obtained in the Second Step are subjected to an enzymatic resolution using a lipase which is capable of selectively hydrolysing esters of (*S*)-3-(3-indolyl)-butanoic acid contained in the aforementioned racemic mixture of esters obtained in the Second Step, to afford (*S*)-3-(3-indolyl)-butanoic acid substantially as a single enantiomer.

Examples of salts of (*S*)-3-(3-indolyl)-butanoic acid shown by Formula (1) include those of alkali metals such as potassium and sodium, those of alkali earth metals such as calcium and magnesium, and ammonium salts.

As will be described below in more detail, (*S*)-3-(3-indolyl)-butanoic acid shown by Formula (1) and its salts are more effective in selectively preventing the growth of *Ralstonia solanacearum* than are (*R*)-3-(3-indolyl)-butanoic acid or its salts, and also more effective than racemic 3-(3-indolyl)-butanoic acid (or its salts) which is a mixture of these two, and hence can dependably suppress bacterial wilt even at a low concentration without causing significant ill effects.

Embodiments of this invention may be considered to include the following:
(1) antibacterial compositions with activity against *Ralstonia solanacearum* having (*S*)-3-(3-indolyl)-butanoic acid shown by Formula (1) as the active component;
(2) antibacterial compositions with activity against *Ralstonia solanacearum* having the sodium salt of (*S*)-3-(3-indolyl)-butanoic acid shown by Formula (1) as the active component; and
(3) antibacterial compositions with activity against *Ralstonia solanacearum* having an ammonium salt of (*S*)-3-(3-indolyl)-butanoic acid shown by Formula (1) as the active component.

The invention will be further explained by means of the following Examples:

### Example 1

Indole (3g) and Meldrum's acid (4.43g) were dissolved in acetonitrile (30ml), and acetaldehyde (purified immediately before use by distillation) was added in two portions of 3ml each, the first portion at the start of the reaction and the second portion 2 hours later, the reaction mixture being maintained at 30°C for 6 hours with stirring. After removal of the solvent by distillation at reduced pressure, the residue was dissolved in a mixture of pyridine (30ml) and ethanol (3ml), then copper particles (150mg) were added, and the reaction mixture was maintained at reflux for 6 hours. After filtration of the reaction mixture, the filtrate was acidified (while monitoring the pH) by addition of 2N hydrochloric acid, and extracted with ether. The ethereal extracts were washed with water, dried with anhydrous magnesium sulfate, and the solvent was removed by distillation under reduced pressure. The residue was purified by silica gel column chromatography (gel: Wakogel C-200 (trade mark of a product of Wako Pure Chemical Industries, Ltd.); solvent: hexane/ethyl acetate = 5/1) to afford 2.25g of the ethyl ester of racemic 3-(3-indolyl)-butanoic acid. A 1/1 mixture of ethanol (20ml) and 10% aqueous potassium hydroxide solution (20ml) was added to this ethyl ester of racemic 3-(3-indolyl)-butanoic acid (2.25g), and, after heating at reflux for 6 hours, the mixture was evaporated to dryness to afford a solid residue. Water was added to this hardened dry substance, and the aqueous mixture was washed with ether. After decolorization by heating with active charcoal, the mixture was filtered to remove the active charcoal. Upon acidification of the decolorized solution with 2N hydrochloric acid there were obtained 1.85g of crystals of racemic 3-(3-indolyl)-butanoic acid.

### Example 2

The ethyl ester of racemic 3-(3-indolyl)-butanoic acid produced in Example 1 (53.6mg) was dissolved in 0.1M acetic acid buffer solution (pH=5) containing 10% *tert*-butanol. Lipase AK (1.5g; trade mark of a product of Amano Pharmaceutical Co., Ltd.). was added to this solution, and the mixture maintained at 55°C for 24 hours with stirring. The reaction mixture was filtered through celite, then the filtrate was acidified (while monitoring the pH) by addition of 1N hydrochloric acid, and extracted with ethyl acetate. The organic extracts were dried with anhydrous sodium sulfate, and the solvent was then removed by distillation under reduced pressure. The residue was separated by means of a silica gel column (gel: Wakogel). First, by elution with a mixture of dichloromethane/ethyl acetate = 9/1 as solvent, was obtained 13.4mg of the ethyl ester of (*R*)-3-(3-indolyl)-butanoic acid, not hydrolysed by Lipase AK. Next, by elution with a mixture of dichloromethane/ethyl acetate = 1/1 as solvent, was obtained 13.4mg of (*S*)-3-(3-indolyl)-butanoic acid. The enantiomeric purity of the (*S*)-3-(3-indolyl)-butanoic acid obtained, as determined by a high performance liquid chromatography (HPLC) method, was 99%.

### Example 3

The ethyl ester of (*R*)-3-(3-indolyl)-butanoic acid obtained in Example 2 above (13mg), was dissolved in 0.1 M phosphoric acid buffer (pH = 7.3) containing 10% *tert*-butanol. Porcine liver esterase (62mg; obtained from Sigma-Aldrich Co.) was added to this solution, and the mixture maintained at 30°C for 24 hours with stirring. The reaction mixture was filtered, and then the filtrate was acidified (while monitoring the pH) by addition of 1N hydrochloric acid, and extracted with ethyl acetate. The organic extracts were washed with water and dried with anhydrous sodium sulfate, and then the solvent was removed by distillation under reduced pressure. The residue was purified by silica gel column chromatography (gel: Wakogel C-200; solvent: dichloromethane/ethyl acetate 1/1) to afford 7mg of (*R*)-3-(3-indolyl)-butanoic acid. Its enantiomeric purity, as determined by an HPLC method, was 99%.

### Example 4

By the minimum inhibitory concentration (MIC) method (which will be described in detail below), the antibacterial activities against *Ralstonia solanacearum* strain 1 of the racemic mixture, the *S* enantiomer and the *R* enantiomer of 3-(3-indolyl)-butanoic acid, obtained in Examples 1, 2 and 3 described above respectively, were measured. The results are shown in Table 1 below.

According to this MIC method, the racemic mixture, the *S* enantiomer and the *R* enantiomer of 3-(3-indolyl)-butanoic acid obtained in Examples 1, 2 and 3 respectively were each dissolved in 4% methyl alcohol, and these solutions were each mixed with an equal amount of a double-strength PCG liquid medium [bactopeptone (10g/litre) + casamino acid (1g/litre) + glucose (10g/litre)] such that the concentrations (in µg/ml) of the racemic mixture, the *S* enantiomer and the *R* enantiomer would be as given in Table 1. The liquid medium thus prepared was filtered through a membrane of pore size 0.22µm to reduce the bacteria count, thereby providing a test medium. Separately, *Ralstonia solanacearum* strain 1 bacteria were preliminarily cultivated using a PCG liquid medium and, after they were collected, a bacterial suspension of 5 x 10⁵cell/ml was obtained in physiological brine. This bacterial suspension (60µl) was inoculated to 3ml of the aforementioned test medium and stirred for cultivation at 30°C for 24 hours. The growth of *Ralstonia solanacearum* strain 1 bacteria was measured by using as the indicator the turbidity of this culture liquid at 600nm. Since the turbidity of the culture liquid would be the same as that of an uninoculated culture liquid if the growth of *Ralstonia solanacearum* strain 1 bacteria were completely inhibited by the racemate, or *S* or *R* enantiomer, the concentration of the racemate, or the *S* or *R* enantiomer that afforded a culture of the same turbidity as an uninoculated culture was defined as the MIC.

**Table 1**

| Concentration (µg/ml) | | 0 | 0.5 | 1.0 | 2.5 | 5 | 10 | 25 |
|---|---|---|---|---|---|---|---|---|
| Growth | Racemate | + | + | + | - | - | - | - |
| | *S* enantiomer | + | + | - | - | - | - | - |
| | *R* enantiomer | + | + | + | + | + | - | - |
| In Table 1: +: Growth observed -: Growth inhibited | | | | | | | | |

Table 1 shows that the MIC of 3-(3-indolyl)-butanoic acid against *Ralstonia solanacearum* strain 1 is about 10µg/ml in the case of the *R* enantiomer and about 2.5µg/ml in the case of the racemic mixture, but that it is only about 1.0µg/ml in the case of the *S* enantiomer. This means that the use of (*S*)-3-(3-indolyl)-butanoic acid or its salts as antibacterial agents is far more effective in inhibiting the growth of *Ralstonia solanacearum* and hence in dependably and selectively suppressing bacterial wilt without causing significant ill effects, even when used at relatively lower concentrations.

## Claims

1. An antibacterial composition with activity against *Ralstonia solanacearum*, the active component of said composition comprising (*S*)-3-(3-indolyl)-butanoic acid shown in Formula 1 given below, or a salt thereof:

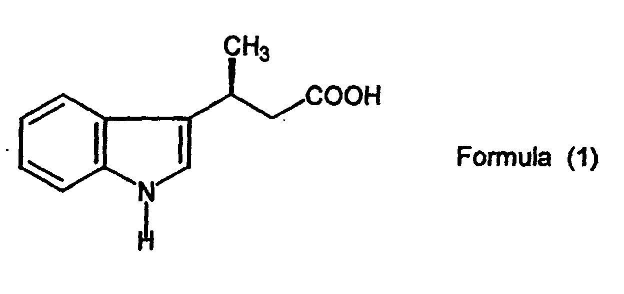

2. The antibacterial composition of claim 1 wherein said (*S*)-3-(3-indolyl)-butanoic acid shown in Formula 1 is obtainable by a process comprising the following steps:
a first step wherein a condensation product of Meldrum's acid and acetaldehyde is caused to undergo an addition reaction with indole to obtain a reaction product,
a second step wherein said reaction product is dissolved in a mixture of pyridine and alcohol, copper is added thereto and a decarboxylation reaction is effected by heating under reflux, to obtain a racemic mixture of esters of 3-(3-indolyl)-butanoic acid, and
a third step wherein the esters obtained in said second step are subjected to an enzymatic resolution using a lipase which is capable of selectively hydrolysing esters of (*S*)-3-(3-indolyl)-butanoic acid contained in said racemic mixture of esters obtained in said second step, to afford (*S*)-3-(3-indolyl)-butanoic acid substantially as a single enantiomer.

## Patentansprüche

1. Antibakterielle Zusammensetzung mit Aktivität gegen *Ralstonia Solanacearum*, wobei die aktive Komponente der Zusammensetzung (*S*)-3-(3-Indolyl)-butansäure, gezeigt in der nachstehend angegebenen Formel 1, oder ein Salz davon umfaßt:

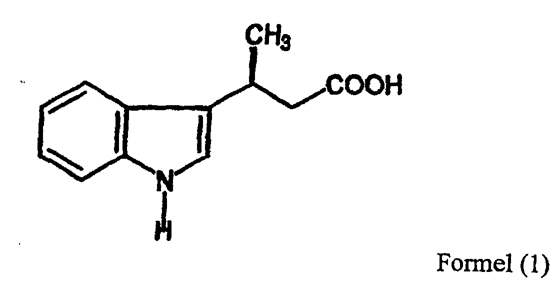

2. Antibakterielle Zusammensetzung nach Anspruch 1, wobei die (*S*)-3-(3-Indolyl)-butansäure, gezeigt in Formel 1, durch ein die folgenden Schritte umfassendes Verfahren erhältlich ist: einen ersten Schritt, wobei verursacht wird, daß ein Kondensationsprodukt von Meldrumsäure und Acetaldehyd eine Additionsreaktion mit Indol eingeht, um ein Reaktionsprodukt zu erhalten, einen zweiten Schritt, wobei das Reaktionsprodukt in einem Gemisch von Pyridin und Alkohol gelöst wird, Kupfer dazugegeben wird und eine Decarboxylierungsreaktion durch Erwärmen unter Rückfluß bewirkt wird, um ein racemisches Gemisch von Estern der 3-(3-Indolyl)-butansäure zu erhalten, und einen dritten Schritt, wobei die Ester, erhalten in dem zweiten Schritt, einer enzymatischen Auflösung unterworfen werden, wobei eine Lipase verwendet wird, die imstande ist, Ester der (*S*)-3-(3-Indolyl)-butansäure, enthalten in dem racemischen Gemisch von Estern, erhalten in dem zweiten Schritt, selektiv zu hydrolysieren, um (*S*)-3-(3-Indolyl)-butansäure im wesentlichen als einziges Enantiomer zu liefern.

## Revendications

1. Composition antibactérienne avec une activité contre le *Ralstonia solanacearum*, le composant actif de ladite composition comprenant de l'acide (*S*)-3-(3-indolyl)butanoïque montré dans la Formule 1 donnée ci-dessous, ou un sel de celui-ci:

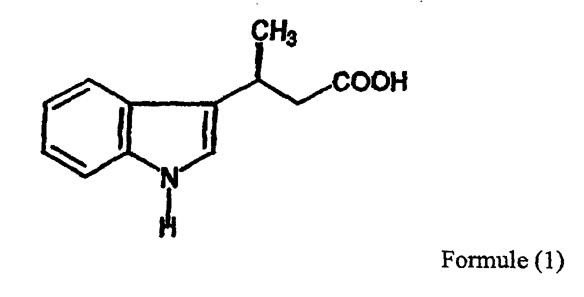

2. Composition antibactérienne suivant la revendication 1, dans laquelle ledit acide (*S*)-3-(3-indolyl)butanoïque montré dans la Formule 1 peut être obtenu par un procédé comprenant les étapes suivantes: une première étape dans laquelle un produit de condensation d'acide de Meidrum et d'acétaldéhyde est entraîné à subir une réaction d'addition avec de l'indole pour obtenir un produit réactionnel, une deuxième étape dans laquelle ledit produit réactionnel est dissous dans un mélange de pyridine et d'alcool, du cuivre est ajouté à celui-ci et une réaction de décarboxylation est effectuée par un chauffage sous reflux, pour obtenir un mélange racémique d'esters d'acide 3-(3-indolyl)butanoïque, et une troisième étape dans laquelle les esters obtenus dans ladite deuxième étape sont soumis à une résolution enzymatique en utilisant une lipase qui est capable d'hydrolyser sélectivement les esters d'acide (*S*)-3-(3-indolyl)butanoïque contenus dans ledit mélange racémique d'esters obtenus dans ladite deuxième étape, pour donner de l'acide (*S*)-3-(3-indolyl)butanoïque substantiellement sous forme d'un seul énantiomère.
